(19) Europäisches Patentamt
European Patent Office
Office européen des brevets

(11) **EP 0 505 760 B1**

(12) **EUROPÄISCHE PATENTSCHRIFT**

(45) Veröffentlichungstag und Bekanntmachung des Hinweises auf die Patenterteilung:
**27.08.1997   Patentblatt 1997/35**

(51) Int Cl.$^6$: **G01B 11/26**, D06H 3/12

(21) Anmeldenummer: **92103384.1**

(22) Anmeldetag: **27.02.1992**

(54) **Verfahren und Vorrichtung zur Feststellung eines Verzugswinkels in einem textilen Material**

Method and device to detect a distortion angle in a textile material

Procédé et dispositif pour détecter un angle de distortion d'un matériel textile

(84) Benannte Vertragsstaaten:
**BE DE FR IT**

(30) Priorität: **27.03.1991  DE 4110119**
**11.04.1991  DE 4111871**

(43) Veröffentlichungstag der Anmeldung:
**30.09.1992   Patentblatt 1992/40**

(73) Patentinhaber: **Mahlo GmbH & Co. KG**
**D-93342 Saal (DE)**

(72) Erfinder: **Vercruysse, Michel, Dipl.-Ing.**
**Rés. Fontainebleau F-68200 Brunstatt (FR)**

(74) Vertreter: **Bohnenberger, Johannes, Dr. et al**
**Meissner, Bolte & Partner**
**Widenmayerstrasse 48**
**80538 München (DE)**

(56) Entgegenhaltungen:
**EP-A- 0 262 525**          **WO-A-89/04887**
**DE-C- 3 717 305**          **DE-U- 1 944 808**

**Beschreibung**

Die Erfindung betrifft ein Verfahren nach dem Oberbegriff des Anspruches 1 sowie eine Vorrichtung zur Durchführung des Verfahrens nach dem Oberbegriff des Anspruches 11.

Bei der Herstellung von Geweben kreuzen sich Kett- und Schußfäden genau rechtwinklig. Während verschiedener späterer Arbeitsgänge in der Ausrüstung können die Gewebe aber wieder verzogen werden.

Bei der Herstellung von Maschenware auf Rundstrickmaschinen schneidet man den entstehenden Schlauch auf, so daß die Maschenware nach dem Aufschneiden generell schräg verzogen ist.

In beiden Fällen muß der Verzug durch entsprechende Richtmaschinen beseitigt werden, wobei diese Richtmaschinen den Verzugswinkel als Steuergröße benötigen.

Es sind verschiedene Verfahren bzw. Vorrichtungen bekannt, bei denen eine Lichtquelle die laufende Textilbahn durchstrahlt, wobei gegenüber der Lichtquelle Fotozellen vorgesehen sind, welche aus dem Durchlicht-Signal ein Signal ableiten, aus dem ein Verzugswinkel herleitbar ist. Derartige Vorrichtungen sind beispielsweise aus der DE-AS 11 09 636, der DE-AS 12 22 012, der DE-OS 16 35 266 oder der EP 0 262 525 A1 bekannt. Weiterhin ist es bekannt, mit Auflicht zu arbeiten, wobei im Prinzip dieselben Signale erzeugt werden.

Ein Verfahren, bei dem nicht der Verlauf von Kett- und Schlußfäden ermittelt wird, sondern lediglich die Maschen gerählt werden, ist aus der WO-A-89 04 887 bekannt.

Von den bekannten textilen Materialien kann nun bei den meisten der Verzugswinkel mit den heute angewendeten optischen Methoden recht sicher erkannt werden. Es gibt jedoch einige problematische Textilarten, die nach wie vor nur sehr bedingt automatisch ausrichtbar sind, da die Verzugswinkelmessung fehlerbehaftet ist.

Einer der "typischen Fehler" liegt darin, daß die Signale aus den Sensoren verrauscht sind. Um das Signal-/Rauschverhältnis zu verbessern, werden Filter, insbesondere Bandpaßfilter verwendet. Dennoch verbleiben einige textile Materialien als nicht analysierbar.

Der Erfindung liegt die Aufgabe zugrunde, Verfahren und Vorrichtung der eingangs genannten Art dahingehend weiterzubilden, daß auch bei schlecht analysierbaren Sensorausgangssignalen eine verbesserte Exaktheit der Verzugswinkelmessung erzielbar ist.

Diese Aufgabe wird verfahrensmäßig durch die im Kennzeichen des Anspruches 1 und vorrichtungsmäßig durch die im Kennzeichen des Anspruches 11 angeführten Merkmale gelöst.

Ein wesentlicher Punkt der Erfindung liegt darin, daß man zunächst feststellt, welche Anteile im Ausgangssignal des Sensors in einer statistischen bzw. nachweisbaren Abhängigkeit zum Verzugswinkel stehen und daß man dann von den Ausgangssignalen des Sensors bzw. von den Signalanteilen nur noch diejenigen weiterverarbeitet, welche die festgestellte Abhängigkeit aufweisen.

Dabei führt man die erwähnte Signalanalyse ebenso wie die Signalfilterung im Frequenzbereich aus. Während bei der bisher im Zeitbereich durchgeführten Signalanalyse, also einer Amplituden-Diskriminierung, eine zweidimensionale Darstellung des Winkels zwischen einer Sensor-Hauptachse und dem textilen Material über die Ausgangsamplitude des Sensors bei einem Verzugswinkel von 0° zu mehrgipfligen Amplitudenverteilungen führen kann, die dann nicht mehr eindeutig analysierbar sind, gelingt es bei Anwendung der vorliegenden Erfindung, diejenigen Signalanteile auszufiltern, welche von derartigen "Nebengipfeln" stammen, so daß nur noch die Signalanteile weiter ausgewertet werden müssen, die ihre Maximalwerte bei einer Ausrichtung der Sensor-Hauptachse parallel zum "Schußfaden" haben. Überraschenderweise konnte festgestellt werden, daß dieser Hauptgipfel (im Zeitbereich) in den meisten Fällen den höchstfrequenten Anteilen innerhalb der Sensor-Ausgangssignale zuzuordnen ist, welche in einer gesicherten Abhängigkeit zum Verzugswinkel stehen. Dies bedeutet, daß man sehr zielgerecht filtern kann, so daß alle höherfrequenten ebenso wie alle niedrigerfrequenten Signalanteile unterdrückt werden.

Es gibt jedoch auch Gewebe, deren höchstfrequente, vom Verzugswinkel abhängigen Signalanteile so niedrige Amplituden (bzw. Energien) aufweisen, daß sie nicht mehr auswertbar sind. In solchen Fällen ist es möglich, Signalanteile mit niedrigeren Frequenzen zur weiteren Auswertung herauszufiltern, wobei diese dann jedoch einem der oben genannten Nebengipfel entsprechen. Dies bedeutet, daß derartige Signalanteile einem Material-"Muster" (z.B. Bindung zwischen Schußfaden und Kettfaden im Gewebe) entsprechen, das nicht senkrecht, sondern in einem definierten Winkel zur Förderrichtung des Materials verläuft. Somit muß bei einer solchen Signalauswertung ein vorgegebener Winkelbetrag bzw. ein entsprechendes Ausgangssignal vom gemessenen "Verzugswinkel" subtrahiert bzw. zu diesem addiert werden.

Wenn man das Sensor-Ausgangssignal hinreichend genau in seine Spektralanteile zerlegt, so kann man direkt aus dem Spektrum ein Erkennungssignal gewinnen, welches die Frequenzen derjenigen Signalanteile identifiziert, welche vom Verzugswinkel abhängig sind. Im einfachsten Fall wird dies über eine Maximalwert-Bestimmung des Spektrums bewerkstelligt, wobei unter Maximalwert sowohl die höchste Amplitude (Leistung) als auch die höchste Frequenz zu verstehen sind.

Bei einigen (wenigen) textilen Materialien hat es sich gezeigt, daß in den Spektren bestimmte "Muster" auftauchen, welche oftmals mehrere Spektralanteile (Frequenzen) umfassen. Um derartige Materialien zu untersuchen, kann man empirisch an eben diesen Materialien gewonnene Daten, die nach Art eines "Katalogs" gespeichert sind, zur Signalverarbeitung bzw. zur Signalerkennung eingeben. Zur Gewinnung dieser katalogisierten Daten ist es mögich, das Material korrekt auszurichten (Verzugswinkel 0) und die nun meßbaren Signale als "Grundmuster" zu speichern, also einen Lernvorgang durchzuführen. Wenn ein solches Material wieder verarbeitet werden muß, so kann dann das erlernte Muster abgerufen und zur Signalverarbeitung wieder verwendet werden.

Als weitere, ggf. zusätzliche Möglichkeit festzustellen, welche Spektralanteile im Ausgangssignal des Sensors vom Verzugswinkel abhängig sind, ist es möglich, deren Streuung und/oder Varianz zu bestimmen. In diesem Fall geht man davon aus, daß die sozusagen regelmäßigsten Signalanteile diejenigen sind, welche am direktesten mit den interessierenden Materialparametern verbunden sind. Man kann dann wiederum diejenigen Signalanteile vernachlässigen, deren Streuung (Varianz) eine vorgegebene "Vertrauensschwelle" überschreiten. Diese Methode eignet sich insbesondere dann, wenn bei einem nur sehr schwierig untersuchbaren Material keine ausgeprägten Maxima in den Spektren feststellbar sind.

In vielen Fällen wird die sog. Fadenzahl des zu bearbeitenden Materials bestimmt, bei einem Gewebe also die Zahl der Schußfäden pro Längeneinheit. Dieser Meßwert kann (multipliziert mit der Fördergeschwindigkeit des textilen Materials) verwendet werden, um die höchste verzugswinkelabhängige Signalfrequenz im ersten Ausgangssignal herzuleiten.

Eine andere Möglichkeit zur Herleitung der Frequenz des höchstfrequenten verzugswinkelabhängigen Signalanteils ist durch die Aufstellung einer Autokorrelationsfunktion des Sensor-Ausgangssignals möglich. Vorzugsweise wird hier jedoch das Ausgangssignal eines Sensors verwendet, dessen Ausgangssignal unabhängig vom Verzugswinkel ist. Aus der (kürzesten) Wiederholungsperiode in der Autokorrelationsfunktion läßt sich dann die höchste Frequenz errechnen.

Wenn ausschließlich das Ausgangssignal eines Sensors mit richtungsabhängiger Ausgangscharakteristik verwendet wird, so ist es von Vorteil, wenn man aus dem ersten Ausgangssignal für verschiedene Winkelpositionen dieses Sensors zur Förderrichtung jeweils ein Frequenzspektrum ermittelt und in Abhängigkeit vom Winkel speichert. Für jedes gespeicherte Spektrum wird dann die Lage der Maximal-Spektralamplitude (oder mehrerer) ermittelt. Durch Vergleich der ermittelten Maximal-Spektralamplituden (sowohl hinsichtlich Frequenz als auch hinsichtlich Amplitude) wird dann die Frequenz hergeleitet, auf welche die Filtereinrichtungen eingestellt werden. Durch die Aufteilung in verschiedene, winkelabhängige Spektren wird ein erheblicher Rauschanteil im Sensor-Ausgangssignal unterdrückt. Die Maximalwertbestimmung wird dadurch erleichtert.

Bevorzugte Ausführungsformen der Erfindung ergeben sich aus den Unteransprüchen.

Nachfolgend wird die Erfindung anhand von Abbildungen näher erläutert. Hierbei zeigen

Fig. 1                    eine schematisierte Gesamtansicht einer ersten Ausführungsform der Erfindung;

Fig. 2                    eine schematisierte Darstellung zur Erläuterung der betrachteten Größen;

Fig. 3 bis 5              Draufsichten auf unterschiedliche Gewebe;

Fig. 6 bis 8              zu den Geweben nach Fig. 3 bis 5 gehörige Sensor-Ausgangssignalkurven bei einem Verzugswinkel = 0°;

Fig. 9 und 10             zwei verschiedene Ausführungsformen von zweiten Abtasteinrichtungen,

Fig. 11 und 12            weitere Beispiele zur Erläuterung der Erfindung;

Fig. $13_1$ bis $13_{16}$    Spektren des Sensor-Ausgangssignals für verschiedene Sensorpositionen; und

Fig. 14 bis 16            Sensor-Ausgangssignalkurven für verschiedene Spektralanteile.

In der nachfolgenden Beschreibung werden gleiche oder gleich wirkende Teile bzw. Baugruppen durchlaufend mit denselben Bezugsziffern bezeichnet. Weiterhin wird in der nachfolgenden Beschreibung auf ein Gewebe als zu untersuchendes textiles Material Bezug genommen. Wie eingangs erläutert, ist die Erfindung jedoch nicht nur auf Gewebe, sondern auf alle solche textilen Materialien anwendbar, bei denen definierte Vorzugsrichtungen für einzelne Komponenten feststellbar sind.

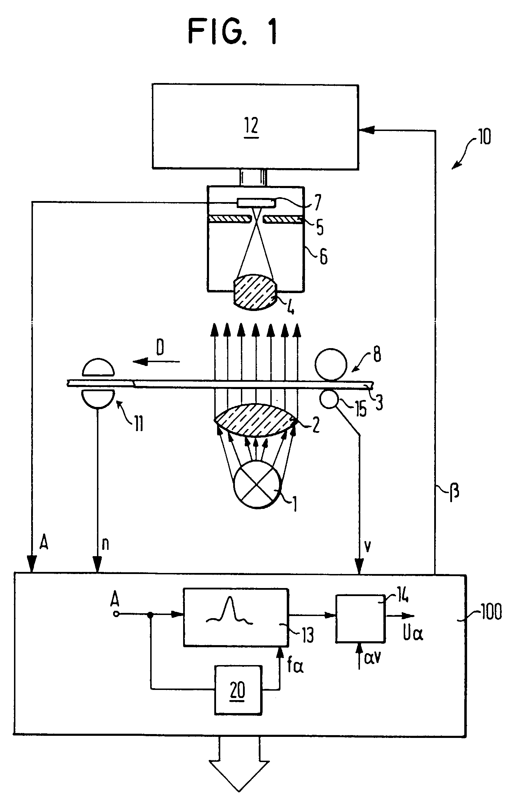

Gemäß Fig. 1 wird ein Gewebe 3 über Fördereinrichtungen 8 in einer definierten Förderrichtung D gefördert. Unter der Materialbahn befindet sich eine Lichtquelle 1, deren Strahlung mittels einer Linse 2 gebündelt und durch das Gewebe geschickt wird. Auf der anderen Seite des Gewebes fällt das durchgelassene Licht über eine Zylinderlinse 4 durch eine Blende 5 auf ein fotoempfindliches Element 7, das zusammen mit der Spaltblende 5 und der Zylinderlinse 4 in einem Gehäuse 6 gehalten ist. Die erste Abtasteinrichtung 10 umfaßt also zum einen einen lichtaussendenden Abschnitt 1, 2, einen lichtaufnehmenden Abschnitt 4 - 7 und einen Stellabschnitt 12.

Das Gehäuse 6 ist über einen Stellmotor 12 in seinem Winkel relativ zur Förderrichtung D einstellbar.

Weiterhin ist ein Fadenzähler 11 im Bereich des geförderten textilen Gewebes vorgesehen, der für jeden vorbeistreichenden Schußfaden ein Ausgangssignal abgibt.

Die Fördereinrichtungen 8 sind weiterhin mit einem Geschwindigkeitsmesser 15 versehen, der ein der Geschwindigkeit des geförderten Gewebes proportionales Signal abgibt.

Die Ausgangssignale A der Abtasteinrichtung 10, die Ausgangssignale n des Fadenzählers 11 und die Geschwindigkeitssignale v des Geschwindigkeitsmesser 15 werden einer Auswert- und Steuereinrichtung 100 zugeführt. Diese umfaßt einen Computer, der neben der Auswertung der Signale auch den Stellmotor 12 ansteuert und ihm ein Sensorwinkelsignal β zur Verfügung stellt.

Neben den üblichen Bauteilen eines Computers (Interfaces, Programm- und Datenspeicher, CPU) ist in der Auswerteinrichtung 100 ein einstellbares Bandfilter 13 vorgesehen, das sowohl in Analog-Technik als auch in Digital-Technik aufgebaut sein kann. Wesentlich an dem Filter 13 ist seine Einstellbarkeit hinsichtlich einer (Durchlaß-) Bandmittenfrequenz und einer Bandbreite, ggf. auch Durchlaß-Kurvenform.

Das Ausgangssignal A, welches an einen Eingang des Filters 13 geführt ist, liegt außerdem an einem Eingang einer zweiten Abtasteinrichtung 20. Deren Funktion wird weiter unten näher erläutert. Die zweite Abtasteinrichtung 20 erzeugt ein Ausgangssignal fα, welches dem Filter 13 zu dessen Einstellung zugeführt wird.

Das entsprechend der Einstellung des Filters 13 gefilterte erste Ausgangssignal A gelangt in einen Winkelanalysator 14, welcher das Signal demoduliert und ein Ausgangssignal Uα erzeugt, das den festgestellten Verzugswinkel repräsentiert. Dieses Ausgangssignal Uα wird an (nicht dargestellte) Regeleinrichtungen geführt, welche den Verzugswinkel in an sich bekannter Weise beseitigen.

Weiterhin wird dem Winkelanalysator 14 (vom Computer) bei Bedarf ein Vorgabewinkel αv zugeführt, über welchen ein (bekannter) Fehler im Winkelanalysator 14 kompensierbar ist.

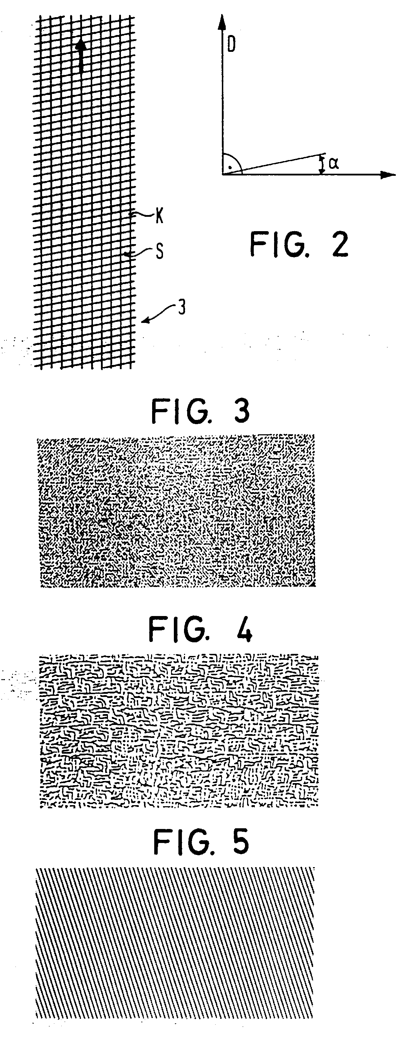

Der Verzugswinkel α, der mit dem erfindungsgemäßen Verfahren bzw. der erfindungsgemäßen Vorrichtung bestimmt werden soll, ist gemäß Fig. 2 als Winkel zwischen Schußfäden S und dem Lot auf die Förderrichtung D definiert, welche mit der Lage von Kettfäden K in einem Gewebe 3 übereinstimmt.

Das in Fig. 2 angedeutete Gewebe ist extrem einfach aufgebaut und entspricht z.B. einem Fliegengitter. Üblichere Gewebebilder sind in den Fig. 3 bis 5 gezeigt. Bei diesen Darstellungen liegen die Kettfäden in horizontaler Richtung. Während bei den Gewebe-Bildern gemäß Fig. 3 und 4 noch relativ deutlich ein horizontales, den Schußfäden entsprechendes Muster erkennbar ist, so wird dieses beim Gewebe nach Fig. 5 durch ein spitzwinklig hierzu verlaufendes Muster überlagert, das sich aus der dort gezeigten Webart ergibt.

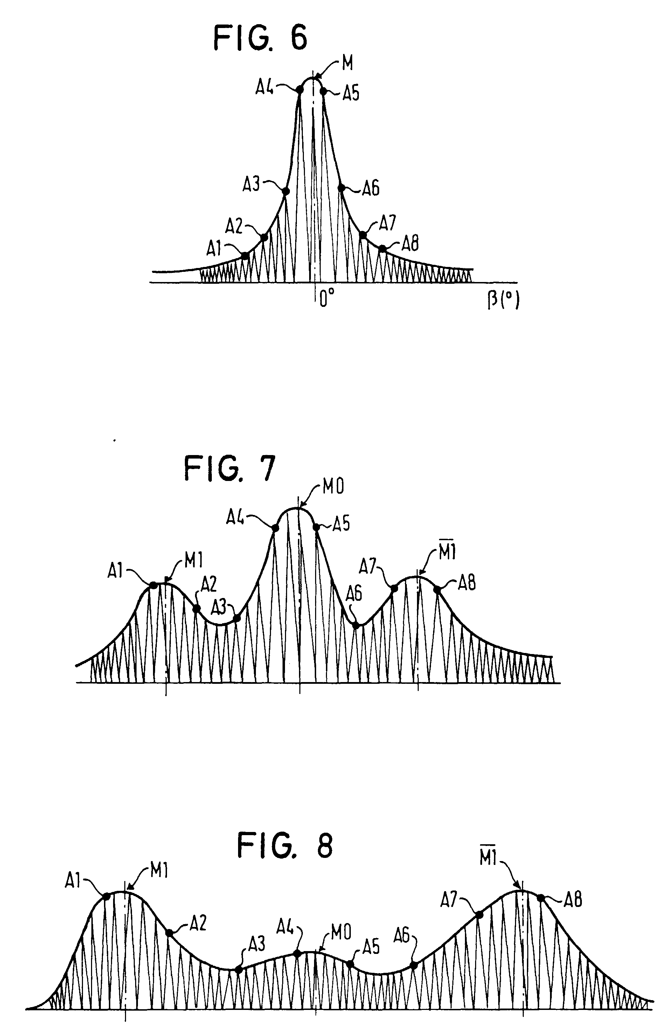

Wenn man mit einem Sensor gemäß Fig. 1 die Gewebe nach den Fig. 3 - 5 abtastet, so ergeben sich Ausgangssignale, wie sie in den Fig. 6 - 8 dargestellt sind. In diesen Abbildungen sind nach oben die Ausgangsamplitude A und von einem Winkel von 0° ausgehend nach rechts und links die Drehwinkel β des Gehäuses 6 aufgezeichnet. Die Fig. 6 - 8 sind an einem Gewebe aufgenommen, an welchem der Verzugswinkel gleich 0° ist, die Schußfäden also rechtwinklig zur Förderrichtung D verlaufen.

Die Kurven sind als durchgezogene Linien gezeichnet, können aber auch lediglich aus einzelnen Stützstellen bestehen, wenn der Stellmotor 12 z.B. ein Schrittmotor ist. In den Fig. 6 - 8 sind acht Stützstellen A1 - A8 eingezeichnet.

Fig. 6 zeigt ein ganz klares Maximum M bei einem Winkel β von 0°. Hieraus ist herleitbar, daß man einen Verzugswinkel ganz einfach durch Bestimmung des Maximalwertes M des ersten Ausgangssignals A über den Winkel β feststellen kann.

Fig. 7 zeigt bereits ein Bild, bei welchem neben einem Maximum M0 in der Mitte (bei 0°) Nebenmaxima M1 und $\overline{M}$1 erkennbar sind. Mit dem bloßen Auge sind diese Nebenmaxima auch in Fig. 4 dadurch erkennbar, daß Diagonalmuster im Gewebe erscheinen.

Die in Fig. 8 gezeigte Darstellung, die einem Gewebe gemäß Fig. 5 entspricht, weist schließlich nur noch ein lokales Maximum M0 in der Mitte (bei 0°) auf, die Nebenmaxima M1 und $\overline{M}$1 sind höher als dieses lokale Maximum. Würde man nun bei derartigen ersten Ausgangssignalen den gemessenen Verzugswinkel dem Maximalwert im ersten Ausgangssignal zuordnen, so wäre das Ergebnis stark fehlerhaft. Es ist nun leicht vorstellbar, daß der kritischste Fall dann besteht, wenn die Signalverläufe zwischen denen nach Fig. 7 und Fig. 8 liegen, also nicht mehr sicher entschieden werden kann, ob eine Maximalwert-Auswertung noch geht oder nicht. Wenn dann durch gewisse Schwankungen oder Störungen in den Ausgangssignalen das zunächst relativ sicher in der Mitte erkannte Maximum M0 verschwindet und der Höchstamplitudenwert bei einem Nebenmaximum M1 oder $\overline{M}$1 liegt, so "springt" die Auswertung und zeigt ganz plötzlich einen großen Verzugswinkel an, was dazu führen würde, daß die entsprechenden Richtsysteme, die ja zu steuern sind, einen nicht vorhandenen Verzug ausregeln wollen und diesen darum erst einführen.

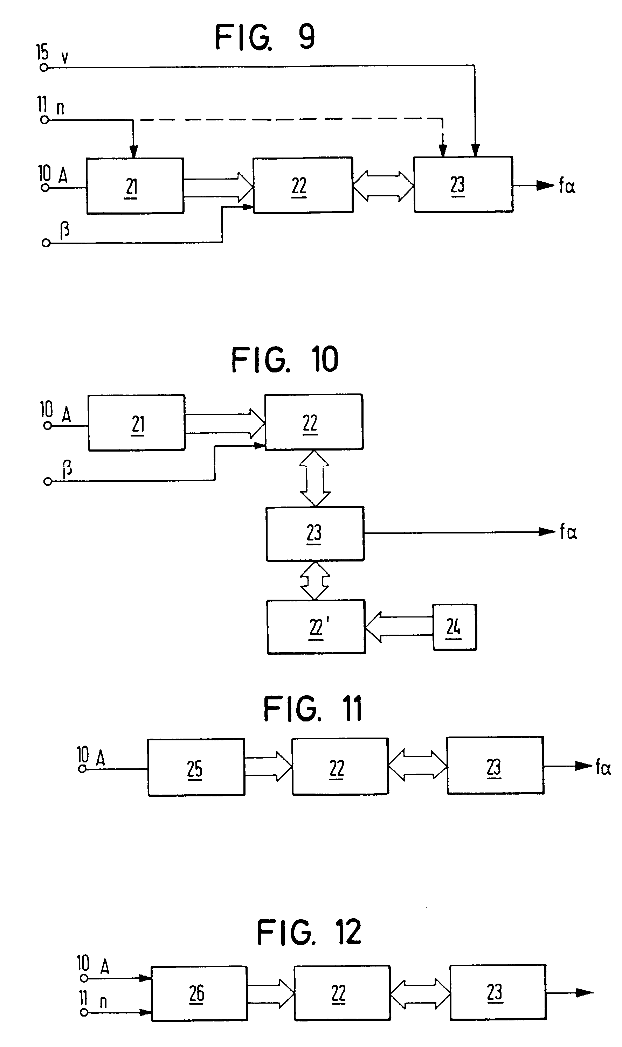

Im folgenden wird anhand der Fig. 9 eine erste Ausführungsform der Erfindung erläutert. Bei dieser Ausführungsform wird das Ausgangssignal A der ersten Abtasteinrichtung 10 einem Spektralanalysator 21 zugeführt. Dieser ist vorzugsweise als FFT-Analysator ausgeführt, der ein Leistungsspektrum erstellt. Die obere Grenzfrequenz des Spektrums wird durch die Abtast- (Digitalisierungs-) Frequenz in Übereinstimmung mit dem bekannten Shannon-Theorem so festgelegt, daß die höchste zu betrachtende Signalfrequenz unterhalb der Mitte des Spektralfensters liegt. Dies ist in Fig. 9 dadurch versinnbildlicht, daß das Ausgangssignal n des Fadenzählers 11 dem Spektralanalysator 21 zugeführt wird.

Das im Spektralanalysator 21 gebildete Spektrum wird in einen Speicher (RAM) 22 geladen, der mit einem Rechner 23 in einer bidirektionalen Verbindung steht. Dem Rechner 23 wird weiterhin das Ausgangssignal v des Geschwindigkeitsmessers 15 zugeführt.

Der Speicher 22 (bzw. ein dort enthaltener Adressengenerator) erhält weiterhin das Ansteuersignal ß für den Stellmotor 12, also ein Signal, welches dem Winkel entspricht, den die erste Abtasteinrichtung 10 relativ zur Förderrichtung D aufweist.

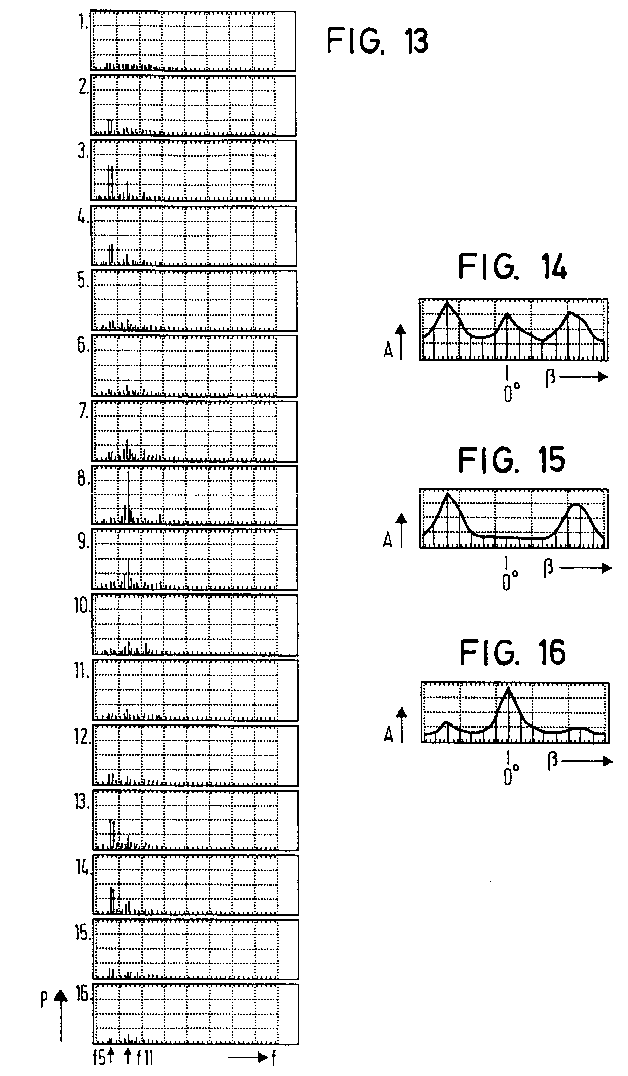

Die Wirkungsweise der in Fig. 9 gezeigten Vorrichtung wird im folgenden unter Bezug auf die Fig. 13 - 16 erläutert.

Fig. 13 zeigt untereinander 16 Leistungsspektren. Jedes der Leistungsspektren 1 - 16 stellt die Verteilung der von der ersten Abtasteinrichtung 10 während einer definierten Zeitdauer gemessenen Energie P über die Frequenz f dar. Jedes der verschiedenen Spektren 1 - 16 wurde (über dieselbe Zeitdauer) für einen anderen Einstellwinkel β der ersten Abtasteinrichtung relativ zur Förderrichtung D erstellt und im Speicher 22 abgelegt.

Betrachtet man nun das Ausgangssignal A der ersten Abtasteinrichtung in seiner Gesamtheit, so entspricht dies einer Durchlaßkurve des Filters 13, die alle in den Spektren 1 - 16 enthaltenen Frequenzen umfaßt. Das Filter 13 ist sozusagen inaktiv. Das so "ausgewertete" Signal ergibt dann eine Verteilung der Ausgangsamplituden des Signals A über den Winkel β, wie sie in Fig. 14 gezeigt ist. Das betrachtete Gewebe entspricht hierbei etwa dem nach Fig. 8, wobei für diese Darstellung ein Gewebe untersucht wurde, das mit einem Verzugswinkel von 0° gefördert wurde. Die in Fig. 14 gezeigte Darstellung ist also ähnlich der nach Fig. 8, so daß eine eindeutige Erkennung des Verzugswinkels anhand der Amplitudenverteilung des ersten Ausgangssignals A sehr schwierig ist.

Betrachtet man sich nun die in Fig. 13 untereinander gezeigten Spektren für die verschiedenen Einstellwinkel β, so lassen sich in den Einzel-Spektren 2-4 und 12-14 starke Maxima für die fünften Spektrallinien (f5) erkennen. Die Spektren 4, 5, 8, 9, 14 und 15 zeigen (zumindest lokale) Maxima bei der 11. Spektrallinie (f11).

Ist nun der Rechner 23 (Fig. 9) derart ausgebildet, daß sein Ausgangssignal fα der fünften Spektrallinie f5 entspricht, so wird das Filter 13 auf eben diese Frequenz als Mittenfrequenz für den Durchlaßbereich eingestellt. Die vom Winkelanalysator 14 untersuchten Signalanteile aus dem ersten Ausgangssignal A umfassen somit nur noch den schmalen, durch f5 definierten Frequenzbereich. Die dann entstehende Kurve ist in Fig. 15 gezeigt. Aus dieser Abbildung ergibt sich, daß die Nebenmaxima (nach Fig. 14) zum allergrößten Teil aus Signalen herrühren, die eine relativ niedrige Frequenz (f5) aufweisen. Wird hingegen das Filter 13 auf das frequenzmäßig höhere Maximum f11 eingestellt, so ergibt sich das in Fig. 16 gezeigte Diagramm. Bei diesem Diagramm sind nun die Nebenmaxima (aus Fig. 14) weit unterdrückt und das Maximum bei 0° ist sehr stark hervorgehoben. Aus dem so gefilterten Signal kann nun der Winkelanalysator 14 sehr leicht durch Bestimmung der Lage des Amplitudenmaximums das dem Verzugswinkel entsprechende Ausgangssignal Uα gewinnen.

Aus Obigem ergibt sich, daß die Auffindung der verzugswinkelabhängigen Signalanteile anhand von Spektren, die aus ersten Ausgangssignalen A bei definierten Einstellwinkeln β der ersten Abtasteinrichtung richtung 10 gewonnen wurden, deshalb recht einfach ist, weil ein hoher Signal-/Rauschabstand der Spektren vorliegt und jeweils nur wenige Spektrallinien hohe Werte erreichen. Selbstverständlich ist es auch möglich, ein Summen-Spektrum (ohne Aufteilung über den Einstellwinkel β) zu bilden und hieraus die der höchsten Signalfrequenz eindeutig zuzuordnende Spektrallinie herauszusuchen.

Weiterhin kann die zweite Abtasteinrichtung 20 derart ausgebildet sein, daß das Ausgangssignal n des Fadenzählers 11 dem Rechner 23 zugeführt wird und dieser aus dem Signal n die Frequenz derjenigen Spektrallinie herleitet, welche den Schußfäden (direkt) zugeordnet ist. Dies gilt selbstverständlich nur dann, wenn das aus dem Fadenzähler 11 kommende Signal "sauber" genug ist.

Wie aus Obigem hervorgeht, mittelt der Spektralanalysator 21 über einen gewissen Zeitraum. Die Spektren stellen also Mittelwerte dar. Zu derartigen Mittelwerten existieren - wie dies aus der Statistik allgemein bekannt ist - verwandte Größen, wie Streuung, Varianz usw., die es erlauben, einzelnen Werten (Spektrallinien) Vertrauensbereiche zuzuordnen, unterhalb derer die dazugehörigen Signalanteile als statistisch unabhängig (vom betrachteten Material) oder als signifikant einschätzbar sind. Betrachtet man beispielsweise das in jeder Fotozelle erzeugte Rauschen, so liefert dies relativ hochfrequente Signalanteile, die (zumindest bei sehr dichten Geweben) eine relativ hohe Amplitude erreichen und somit zu hohen Spektralanteilen führen. Diese Spektralanteile sind aber in sich statistisch unabhängig (eben Rauschen) und können somit durch eine Varianzbetrachtung als "Störsignale" betrachtet und damit eliminiert werden.

Bei der vorhergehenden Betrachtung wurde davon ausgegangen, daß das betrachtete Material mit konstanter Geschwindigkeit gefördert wird. Um nun Geschwindigkeitsschwankungen ausgleichen zu können, wird das Ausgangssignal v des Geschwindigkeitsmessers 15 dem Rechner 23 übermittelt, der dieses zum Zwecke der Normierung weiterverwendet. Eine solche Normierung kann einfach dadurch geschehen, daß alle Frequenzwerte der Spektren durch die gemessene Geschwindigkeit dividiert werden. Somit wird die Analyse eines (einheitlichen) Materials unabhängig von der Fördergeschwindigkeit.

Bei der in Fig. 10 gezeigten zweiten Ausführungsform der Erfindung werden die im Speicher 22 gespeicherten Spektren im Rechner 23 mit Spektren verglichen, die in einem Speicher 22' gespeichert sind, wobei die dort gespeicherten Spektren über eine Eingabeeinheit 24 als katalogisierte Spektren eingegeben wurden. Derartige katalogisierte Spektren können dadurch gewonnen werden, daß man für ein definierbares Material (z.B. ein bestimmter Gardinenstoff) bei einem bekannten Verzugswinkel (vorzugsweise 0°) die Spektren bestimmt und unter einem dem Material zuzuordnenden Namen abspeichert. Der Maschinenführer kann nun immer dann, wenn das Material auftaucht, über die Eingabeeinheit 24 die entsprechenden Spektren aufrufen, die dann dem Rechner 23 zum Vergleich mit dem aktuell gemessenen Spektrum zur Verfügung stehen. Aus dem Vergleich der Spektren oder auch nur einiger Eckdaten der Spektren läßt sich dann ein Frequenzlinienmuster fn herleiten, mittels dessen das Filter 13 eingestellt wird, um dem Winkelanalysator 14 ein einwandfrei auswertbares Signal zur Verfügung zu stellen.

Es wäre beispielsweise ein Gewebe vorstellbar, das zu einer Ausgangssignalverteilung gemäß Fig. 15 führt, wenn man das Filter 13 breitbandig einstellt. Es fehlt also in diesem Signal der dem Verzugswinkel bei 0° zuzuordnende Maximalwert, der in Fig. 14 mittig zu sehen ist. In diesem Fall kann nun der Rechner 23 die den Nebenmaxima (nach Fig. 15) zuzuordnenden Spektrallinien (f5) als Basiswerte zur Herleitung des Filtereinstellsignals $f\alpha$ verwenden. In diesem Fall wird dann aber der Rechner 23 ein Signal $\alpha v$ für den Vorgabewinkel herleiten, um welchen das betrachtete Maximum vom Null-Wert verschoben ist. Je nachdem, ob der in Fig. 15 rechte oder linke Maximalwert im Winkelanalysator 14 zur Gewinnung des Verzugswinkelsignals $U\alpha$ verwendet wird, muß dieser Vorgabewinkel $\alpha v$ zum Ergebnis addiert oder von diesem subtrahiert werden.

Bei den in Fig. 11 und Fig. 12 gezeigten Anordnungen handels es sich um weitere, nicht beanspruchte Beispiele, die das Verständnis der Erfindung erleichtem sollen.

Gemäß Fig. 11 wird bei dieser Variante die höchste (im allgemeinen der Fadenzahl entsprechende) Frequenz der vom Verzugswinkel abhängigen Anteile im Ausgangssignal A der ersten Abtasteinrichtung 10 mittels eines Autokorrelators 25 hergeleitet, welchem diese Ausgangssignale A zugeführt werden. Die im Autokorrelator 25 gebildete Autokorrelationsfunktion wird dann im Speicher 22 gespeichert und vom Rechner 23 analysiert. Aus der Erkennung des bei der kürzesten Wieäerholungsperiode (aber größer 0) auftretenden Korrelationsmaximums ist dann die höchste Frequenz der Signalanteile herleitbar, die vom Verzugswinkel abhängig sind. Dadurch ist also wieder das Filtereinstellsignal $f\alpha$ errechenbar.

Nach Fig. 12 wird eine Kreuzkorrelationsfunktion zwischen dem Ausgangssignal A der ersten Abtasteinrichtung 10 und dem Ausgangssignal n des Fadenzählers 11 gebildet. Die weitere Auswertung geschieht ebenso wie im Zusammenhang mit Fig. 11 beschrieben. Hierbei wird davon ausgegangen, daß an den beiden "Abtasteinrichtungen" 10 und 11 in zeitlicher Folge dasselbe Muster auftaucht. Selbstverständlich muß die durch die räumlich unterschiedlichen Anordnungen mit einfließende zeitliche Verschiebung der Signale gegeneinander bei Auswertung der Kreuzkorrelationsfunktion verrechnet werden.

## Patentansprüche

1. Verfahren zur Feststellung eines Verzugswinkels in einem textilen Material, einem Gewebe, Gewirke oder Gestrikke, das in einer Förderrichtung gefördert wird, wobei das textile Material mittels einer Abtasteinrichtung (10) mit einem ersten Sensor (7) abgetastet wird, die ein erstes Ausgangssignal (A) abgibt, welches von einer Winkelposition des Sensors (7) zur Förderrichtung und zum Verzugswinkel ($\alpha$) abhängt, wobei das erste Ausgangssignal (A) über Filtereinrichtungen (13) derartig gefiltert wird, daß solche Signalanteile aus dem Ausgangssignal (A) herausgefiltert werden, die-statistisch-unabhängig vom Verzugswinkel sind,
**dadurch gekennzeichnet,**
daß die Filtereinrichtungen (13) hinsichtlich ihrer Durchlaßkurve, ihrer Mittenfrequenz, ihrer Bandbreite und/oder ihrer Filterkurve mittels eines zweiten Ausgangssignals (f $\alpha$) einer Signalverarbeitungseinrichtung (20) eingestellt werden, das von der Frequenzcharakteristik derjenigen Signalanteile aus dem ersten Ausgangssignal (A) abhängt, die-statistisch-abhängig vom Verzugswinkel ($\alpha$) sind, so daß die Durchlaßkurve der Filtereinrichtungen (13) auf die vom Verzugswinkel abhängigen Signalanteile frei anpaßbar sind, wobei das erste Ausgangssignal (A) in seine Spektralanteile zerlegt wird, daraus ein Erkennungssignal hergeleitet und dieses der Signalverarbeitungseinrichtung (20) zu Erkennung der Verzugswinkel abhängigen Signalanteile zugeführt wird.

2. Verfahren nach Anspruch 1,
dadurch gekennzeichnet,
daß die höchstfrequenten verzugswinkelabhängigen Signalanteile als zweites Ausgangssignal gebildet werden.

3. Verfahren nach Anspruch 1,

dadurch gekennzeichnet,
daß ein unterhalb der höchstfrequenten, vom Verzugswinkel abhängigen Signalanteile liegender Signalanteil als zweites Ausgangssignal gebildet wird, und daß ein vorgegebener Winkelbetrag bzw. ein entsprechendes Ausgangssignal vom zweiten Ausgangssignal subtrahiert wird.

4. Verfahren nach einem der vorhergehenden Ansprüche,
dadurch gekennzeichnet,
daß das erste Ausgangssignal in seine Spektralanteile zerlegt wird, daraus ein Erkennungssignal hergeleitet und dieses den zweiten Abtasteinrichtungen zur Erkennung der verzugswinkelabhängigen Signalanteile zugeführt wird.

5. Verfahren nach Anspruch 4,
dadurch gekennzeichnet,
daß Erkennungskriterien anhand katalogisierter Gewebedaten als Erkennungssignal von einer Bedienungsperson eingegeben werden und/oder ein momentan vorhandener Verzugswinkel von einer Bedienungsperson eingegeben und dem momentan vorliegenden ersten und/oder zweiten Ausgangssignal bzw. seinem Spektrum in einem Lernvorgang zugeordnet wird und daraus die Erkennungskriterien hergeleitet werden.

6. Verfahren nach Anspruch 5,
dadurch gekennzeichnet,
daß die im Lernvorgang festgestellten Erkennungskriterien unter einem gewebespezifischen Merkmal für spätere Auswertvorgänge gespeichert werden.

7. Verfahren nach einem der Ansprüche 4 oder 5,
dadurch gekennzeichnet,
daß die Streuung und/oder Varianz der Spektralanteile im ersten und/oder zweiten Ausgangssignal festgestellt und , diejenigen Spektralanteile als verzugswinkelabhängig erkannt werden, welche eine vorgegebene, vorzugsweise relativ zu einem Grund-Rauschen vorgegebene Streuung und/oder Varianzschwelle unterschreiten.

8. Verfahren nach Anspruch 2,
dadurch gekennzeichnet,
daß die Fadenzahl ermittelt und daraus die höchste verzugswinkelabhängige Signalfrequenz im ersten Ausgangssignal hergeleitet wird.

9. Verfahren nach einem der vorhergehenden Ansprüche,
dadurch gekennzeichnet,

daß aus dem ersten Ausgangssignal für verschiedene Winkelpositionen des ersten Sensors zur Förderrichtung jeweils ein Frequenzspektrum ermittelt und in Abhängigkeit vom Winkel gespeichert wird, und
daß für jedes Spektrum die Lage der Maximal-Spektralamplitude(n) ermittelt wird (werden).

10. Verfahren nach einem der vorhergehenden Ansprüche,
dadurch gekennzeichnet,

daß die Geschwindigkeit ermittelt wird, mit welcher das textile Material gefördert wird, und
daß die Lage der Durchlaßkurve des Bandpaßfilters in Abhängigkeit von der ermittelten Geschwindigkeit korrigiert und/oder normiert wird.

11. Vorrichtung zur Feststellung eines Verzugswinkels in einem textilen Material, Gewebe, Gewirke oder Gestricke, das in einer Förderrichtung gefördert wird, mit mindestens einer ersten Abtasteinrichtung (10), die ein erstes Ausgangssignal abgibt, das von einer Winkelposition des Sensors zur Förderrichtung und zum Verzugswinkel abhängt, mit Filtereinrichtungen, um solche Signalanteile aus dem ersten Ausgangssignal heraus zu filtern, die-statistisch-unabhängig vom Verzugswinkel sind,
**dadurch gekennzeichnet**,
daß die Filtereinrichtungen (13) ein Bandpaßfilter umfassen, das hinsichtlich seiner Durchlaßkurve, insbesondere deren Mittenfrequenz, Bandbreite und/oder Filterkurvenform einstellbar ist, und daß mindestens eine Signalverarbeitungseinrichtung (20) vorgesehen ist, die ein zweites Ausgangssignal erzeugt, das von der Frequenzcharakteristik derjenigen Signalanteile aus dem ersten Ausgangssignal abhängt, die-statistisch-abhängig vom Verzugs-

EP 0 505 760 B1

winkel sind und den Filtereinrichtungen (13) zur Anpassung der Durchlaßkurve auf die Verzugswinkel abhängigen Signalanteile das zweite Ausgangssignal zuführt, wobei die Signalverarbeitungseinrichtung (20) Signalerkennungseinrichtungen (21) umfaßt, die derart ausgebildet sind, daß das erste Ausgangssignal in seine Spektralanteile zerlegbar und in der Signalverarbeitungseinrichtung (20) eine Erkennungssignal (f $\alpha$) zur Erkennung der Verzugswinkel abhängigen Signalanteile erzeugbar ist.

**12.** Vorrichtung nach Anspruch 11,
dadurch gekennzeichnet,
daß die zweite Abtasteinrichtung (20) derart ausgebildet ist, daß die höchstfrequenten, vom Verzugswinkel abhängigen Signalanteile als zweites Ausgangssignal gebildet werden.

**13.** Vorrichtung anch Anspruch 11,
dadurch gekennzeichnet,

   daß die zweiten Abtasteinrichtungen (20) derart ausgebildet sind, daß ein unterhalb der höchstfrequenten, vom Verzugswinkel abhängigen Signalanteile liegender Signalanteil als zweites Ausgangssignal gebildet wird, und
   daß Vorgabeeinrichtungen (24) in den zweiten Abtasteinrichtungen (20) vorgesehen sind, die einen vorgegebenen Winkelbetrag ($\alpha$v) bzw. ein entsprechendes Ausgangssignal vom zweiten Ausgangssignal subtrahieren.

**14.** Vorrichtung nach einem der Ansprüche 11 - 13,
dadurch gekennzeichnet, daß
die zweiten Abtasteinrichtungen (20) Signalerkennungseinrichtungen (21) umfassen, die derart ausgebildet sind, daß das erste Ausgangssignal in seine Spektralanteile zerlegbar und in den zweiten Abtasteinrichtungen (20) ein Erkennungssignal (f$\alpha$) zur Erkennung der verzugswinkelabhängigen Signalanteile erzeugbar ist.

**15.** Vorrichtung nach Anspruch 14,
dadurch gekennzeichnet,
daß die Signalerkennungseinrichtungen (21) eine Bedienungstastatur (25) umfassen, über welche Erkennungskriterien als Erkennungssignal eingebbar sind und/oder ein momentan vorhandener Verzugswinkel eingebbar und dem momentanen ersten und/oder zweiten Ausgangssignal in einem Lernvorgang zugeordnet werden kann.

**16.** Vorrichtung nach einem der Ansprüche 14 oder 15,
gekennzeichnet durch
Speichereinrichtungen (22) zum auslesbaren Speichern von Erkennungskriterien, die einer bestimmten Materialart zuzuordnen sind.

**17.** Vorrichtung nach einem der Ansprüche 14 oder 15,
dadurch gekennzeichnet,
daß die Signalerkennungs-Einrichtungen einen Streuungs- oder Varianzrechner (23) umfassen, der Spektralanteile im ersten oder zweiten Ausgangssignal feststellt und diejenigen Spektralanteile als verzugswinkelabhängig erkennt und ein entsprechendes Erkennungssignal abgibt, welche eine vorgebbare, vorzugsweise relativ vorgebbare Streuung und/oder Varianzschwelle unterschreiten.

**18.** Vorrichtung nach einem der Ansprüche 11 - 17,
dadurch gekennzeichnet,

   daß die zweite Abtasteinrichtung (20) einen Spektralanalysator (21) als Signalerkennungseinrichtung umfaßt, welchem das erste Ausgangssignal und die Winkelposition des ersten Sensors (10) zur Förderrichtung zugeführt werden, sowie Speichereinrichtungen (22), in denen getrennt voneinander für verschiedene Winkelpositionen Spektren des ersten Ausgangssignals gespeichert werden, und
   daß Recheneinrichtungen (23) vorgesehen sind, welche in den gespeicherten Spektren Amplituden-Maximalwerte auffinden.

**19.** Vorrichtung nach einem der Ansprüche 11 - 18,
dadurch gekennzeichnet,
daß Geschwindigkeitsmeßeinrichtungen (15) vorgesehen sind, welche die Fördergeschwindigkeit des textilen Ma-

8

terials (1) abtasten und ein Geschwindigkeitssignal erzeugen, über welches die Lage der Durchlaßkurve des Bandpaßfilters (13) korrigierbar und/oder normierbar ist.

**Claims**

1. Method for detecting a warp angle in a textile material, a woven or knitted fabric, which is conveyed in a conveying direction, the textile material being scanned by means of a scanning device (10) having a first sensor (7), the said scanning device emitting a first output signal (A) which depends on an angular position of the sensor (7) relative to the conveying direction and to the warp angle ($\alpha$), the first output signal (A) being filtered via filter devices (13) in such a way that those signal components which are statistically independent of the warp angle are filtered out of the output signal (A), characterized in that the transmission curve, centre frequency, bandwidth and/or filter curve of the filter devices (13) are set by means of a second output signal (f$\alpha$) of a signal-processing device (20), the said second output signal depending on the frequency characteristic of those signal components of the first output signal (A) which are statistically dependent on the warp angle ($\alpha$), so that the transmission curves of the filter devices (13) can be freely adapted to the signal components dependent on the warp angle, the first output signal (A) being broken down into its spectral components, a recognition signal being derived from these and the said recognition signal being fed to the signal-processing device (20) for the purpose of recognizing the signal components dependent on the warp angle.

2. Method according to Claim 1, characterized in that the highest-frequency signal components dependent on the warp angle are formed as a second output signal.

3. Method according to Claim 1, characterized in that a signal component lying below the highest-frequency signal components dependent on the warp angle is formed as a second output signal, and in that a predetermined angle amount or a corresponding output signal is subtracted from the second output signal.

4. Method according to one of the preceding claims, characterized in that the first output signal is broken down into its spectral components, a recognition signal is derived from these and the said recognition signal is fed to a second scanning device for the purpose of recognizing the signal components dependent on the warp angle.

5. Method according to Claim 4, characterized in that recognition criteria are entered as a recognition signal by an operator on the basis of catalogued fabric data and/or a momentarily existent warp angle is entered by an operator and is assigned to the momentarily occurring first and/or second output signal or to its spectrum in a learning operation and the recognition criteria are derived therefrom.

6. Method according to Claim 5, characterized in that the recognition criteria detected in the learning operation are stored under a fabric-specific feature for subsequent evaluation operations.

7. Method according to one of Claims 4 or 5, characterized in that the dispersion and/or variance of the spectral components in the first and/or second output signal are detected and those spectral components which fall short of a predetermined dispersion and/or variance threshold preferably predetermined in relation to background noise are recognized as dependent on the warp angle.

8. Method according to Claims 2, characterized in that the thread count is determined and the highest signal frequency dependent on the warp angle in the first output signal is derived therefrom.

9. Method according to one of the preceding claims, characterized in that a frequency spectrum is determined from the first output signal in each case for different angular positions of the first sensor relative to the conveying direction and is stored as a function of the angle, and in that the position of the maximum spectral amplitude or amplitudes is determined for each spectrum.

10. Method according to one of the preceding claims, characterized in that the speed at which the textile material is conveyed is determined, and in that the position of the transmission curve of the band-pass filter is connected and/or standardized as a function of the speed determined.

11. Apparatus for detecting a warp angle in a textile material, woven or knitted fabric, which is conveyed in a conveying direction, with at least one first scanning device (10) which emits a first output signal which depends on an angular position of the sensor relative to the conveying direction and to the warp angle, and with filter devices in order to filter those signal components which are statistically independent of the warp angle out of the first output signal, characterized in that the filter devices (13) comprise a band-pass filter, of which the transmission curve, in particular the centre frequency, bandwidth and/or filter curve shape can be set, and in that there is provided at least one signal-processing device (20) which generates a second output signal which depends on the frequency characteristic of those signal components of the first output signal which are statistically dependent on the warp angle, the said signal-processing device feeding the second output signal to the filter devices (13) for the purpose of adapting the transmission curve to the signal components dependent on the warp angle, the signal-processing device (20) comprising signal recognition devices (21) which are designed in such a way that the first output signal can be broken down into its spectral components and a recognition signal ($f\alpha$) for recognizing the signal components dependent on the warp angle can be generated in the signal-processing device (20).

12. Apparatus according to Claim 11, characterized in that the second scanning device (20) is designed in such a way that the highest-frequency signal components dependent on the warp angle are formed as a second output signal.

13. Apparatus according to Claim 11, characterized in that the second scanning devices (20) are designed in such a way that a signal component lying below the highest-frequency signal components dependent on the warp angle is formed as a second output signal, and in that there are provided in the second scanning devices (20) predetermining devices (24) which a subtract a predetermined angle amount ($\alpha v$) or a corresponding output signal from the second output signal.

14. Apparatus according to one of Claims 11 to 13, characterized in that the second scanning devices (20) comprise signal recognition devices (21) which are designed in such a way that the first output signal can be broken down into its spectral components and a recognition signal ($f\alpha$) for recognizing the signal components dependent on the warp angle can be generated in the second scanning devices (20).

15. Apparatus according to Claim 14, characterized in that the signal recognition devices (21) comprise an operator's keyboard (25), via which recognition criteria can be entered as a recognition signal and/or a momentarily existent warp angle can be entered and can be assigned to the momentary first and/or second output signal in a learning operation.

16. Apparatus according to one of Claims 14 or 15, characterized by storage devices (22) for the read-out storage of recognition criteria which are to be assigned to a specific type of material.

17. Apparatus according to one of Claims 14 or 15, characterized in that the signal recognition devices comprise a dispersion or variance computer (23) which detects spectral components in the first or second output signal, recognizes as dependent on the warp angle those spectral components which fall short of a predeterminable, preferably relatively predeterminable dispersion and/or variance threshold, and emits a corresponding recognition signal.

18. Apparatus according to one of Claims 11 to 17, characterized in that the second scanning device (20) comprises, as a signal recognition device, a spectral analyser (21) to which the first output signal and the angular position of the first sensor (20) relative to the conveying direction are fed, and storage devices (22), in which spectra of the first output signal are stored separately from one another for different angular positions, and in that computing devices (23), which locate maximum amplitude values in the stored spectra, are provided.

19. Apparatus according to one of Claims 11 to 18, characterized in that there are provided speed-measuring devices (15) which scan the conveying speed of the textile material and generate a speed signal, via which the position of the transmission curve of the band-pass filter (13) can be corrected and/or standardized.

## Revendications

1. Procédé pour déterminer l'angle d'étirage d'un matériel textile, tissé, à mailles ou tricoté qui est transporté dans une direction, procédé par lequel le matériel textile est analysé par un dispositif d'analyse (10) avec un premier capteur (7) délivrant un premier signal de sortie (A) qui dépend de l'angle que fait le capteur (7) avec la direction du transport et de l'angle d'étirage ($\alpha$), ce premier signal de sortie (A) étant filtré par des dispositifs de filtrage (13) de telle sorte que les parties de signaux qui sont indépendantes statistiquement de l'angle d'étirage soient extraites par filtrage du signal de sortie (A), caractérisé en ce que les dispositifs de filtrage (13), quant à leur courbe de transfert, leur fréquence centrale, leur largeur de bande passante et/ou leur courbe de filtrage, sont ajustés au moyen d'un second signal de sortie (fα) d'un dispositif de traitement de signaux (20), lequel deuxième signal dépend des caractéristiques de fréquences de ceux des parties de signaux du premier signal de sortie (A) dépendant statistiquement de l'angle d'étirage (α), en sorte que la courbe de transfert des dispositifs de filtrage (13) soit librement adaptable aux parties de signaux dépendantes de l'angle d'étirage, par lequel le premier signal de sortie (A) est décomposé en ses parties spectrales dont il en résulte un signal de reconnaissance qui est appliqué au dispositif de traitement des signaux (20) pour reconnaître les parties de signaux dépendantes de l'angle d'étirage.

2. Procédé selon la revendication 1, caractérisé en ce que les parties de signaux de hautes fréquences dépendantes de l'angle d'étirage forment un deuxième signal de sortie.

3. Procédé selon la revendication 1, caractérisé en ce qu'une partie de signal situé en dessous des parties de signaux de hautes fréquences dépendantes de l'angle d'étirage est pris comme deuxième signal de sortie, et en ce qu'un signal de sortie correspondant à un angle prédéterminé est soustrait du deuxième signal de sortie.

4. Procédé selon l'une des revendications précédentes, caractérisé en ce que le premier signal de sortie est décomposé en ses parties spectrales dont il en résulte un signal de reconnaissance que l'on applique au deuxième dispositif d'analyse pour reconnaître les parties de signaux dépendantes de l'angle d'étirage.

5. Procédé selon la revendication 4, caractérisé en ce qu'un opérateur introduit des critères de reconnaissance en tant que signal de reconnaissance sur la base de données cataloguées concernant le tissu et/ou un opérateur introduit l'angle d'étirage d'un moment donné, et en ce que le premier et/ou deuxième signal de sortie du moment correspondant, respectivement son spectre, est appliqué à un dispositif d'apprentissage d'où il en résulte les critères de reconnaissance.

6. Procédé selon la revendication 5, caractérisé en ce que les critères de reconnaissance résultant du dispositif d'apprentissage sont stockés sous un repère spécifique au tissu en vue d'analyses ultérieures.

7. Procédé selon l'une des revendications 4 ou 5, caractérisé en ce que la dispersion et/ou la variance des parties du spectre dans le premier et/ou le deuxième signal de sortie est établie, et en ce que sont reconnues comme étant dépendantes de l'angle d'étirage celles des parties du spectre qui sont situées en dessous d'un seuil de dispersion ou d'un seuil de variance prédéterminé, de préférence prédéterminé par rapport à un bruit de fond.

8. Procédé selon la revendication 2, caractérisé en ce que le nombre de fils est établi, et en ce qu'on en déduit la plus haute fréquence de signal dépendante de l'angle d'étirage dans le premier signal de sortie.

9. Procédé selon l'une des revendications précédentes, caractérisé en ce que l'on détermine dans le premier signal de sortie, pour chaque position angulaire du premier capteur par rapport à la direction du transport, un spectre de fréquences qui est mémorisé en fonction de l'angle, et en ce que l'on détermine pour chaque spectre la position de(s) amplitude(s) maximale(s) de spectre.

10. Procédé selon l'une des revendications précédentes, caractérisé en ce que l'on détermine la vitesse avec laquelle le matériel textile est transporté, et en ce qu'on corrige et/ou normalise la courbe de transfert du filtre à bande passante en fonction de la vitesse déterminée.

11. Dispositif pour détecter l'angle d'étirage dans un matériel textile, tissé, à mailles, ou tricoté qui est transporté dans une direction, comprenant au moins un premier dispositif d'analyse (10) délivrant un premier signal de sortie qui dépend de l'angle que fait le capteur avec la direction de transport et avec l'angle d'étirage, et des dispositifs de filtrage pour extraire les parties du premier signal de sortie qui sont indépendantes statistiquement de l'angle d'étirage, caractérisé en ce que les dispositifs de filtrage (13) comprennent un filtre à bande passante réglable en regard de sa courbe de transfert, notamment de sa fréquence centrale, de sa largeur de bande et/ou de sa forme de courbe de filtre, et en ce qu'au moins un dispositif de traitement des signaux (20) est prévu pour produire un deuxième signal de sortie dépendant des caractéristiques de fréquences de ceux des parties de signaux du premier signal de sortie dépendant statistiquement de l'angle d'étirage, second signal qui est appliqué aux dispositifs de filtrage (13) pour adapter la courbe de transfert aux parties de signaux dépendantes de l'angle d'étirage, dans lequel le dispositif de traitement des signaux (20) comprend des dispositifs de reconnaissance des signaux (21) conçus de telle sorte que le premier signal de sortie soit décomposé en ses parties spectrales, et qu'un signal de reconnaissance (fα) soit établi dans le dispositif de traitement des signaux (20) pour reconnaître les parties de signaux dépendantes de l'angle d'étirage.

12. Dispositif selon la revendication 11, caractérisé en ce que le deuxième dispositif de détection (20) est conçu de telle sorte que les parties de signaux de hautes fréquences dépendantes de l'angle d'étirage forment un deuxième signal de sortie.

13. Dispositif selon la revendication 11, caractérisé en ce que le deuxième dispositif d'analyse (20) est conçu de telle sorte que les parties de signaux situées en dessous des parties de signaux de hautes fréquences dépendantes de l'angle d'étirage soient pris comme deuxième signal de sortie, et en ce qu'il est prévu un dispositif particulier (24) dans le deuxième dispositif d'analyse (20) pour soustraire un signal de sortie correspondant à un angle prédéterminé (αv) au deuxième signal de sortie.

14. Dispositif selon l'une des revendications 11 à 13, caractérisé en ce que le deuxième dispositif d'analyse (20) comprend des dispositifs de reconnaissance des signaux (21) conçus de telle sorte que le premier signal de sortie soit décomposable en ses parties spectrales, et qu'un signal de reconnaissance (fα) puisse être établi dans le deuxième dispositif d'analyse (20) pour reconnaître les parties de signaux dépendantes de l'angle d'étirage.

15. Dispositif selon la revendication 14, caractérisé en ce que les dispositifs de reconnaissance des signaux (21) comprennent un clavier de service (25) avec lequel il est possible d'entrer des critères de reconnaissance en tant que signal de reconnaissance, ainsi qu'un angle d'étirage d'un moment donné, et en ce que le premier et/ou deuxième signal de sortie du moment correspondant peut être appliqué à un dispositif d'apprentissage.

16. Dispositif selon l'une des revendications 14 ou 15, caractérisé en ce qu'il comprend des dispositifs de mémoire (22) pour mémoriser, de telle sorte à pouvoir être relus, des critères de reconnaissance associés à un type de matériel particulier.

17. Dispositif selon l'une des revendications 14 ou 15, caractérisé en ce que les dispositifs de reconnaissance de signaux comprennent un calculateur de dispersion ou de variance (23) établissant les parties de spectre dans le premier ou le deuxième signal de sortie et reconnaissant comme étant dépendantes de l'angle d'étirage celles des parties du spectre, et leurs signaux de reconnaissance correspondant, qui sont situées en dessous d'un seuil de dispersion ou d'un seuil de variance prédéterminé, de préférence prédéterminé par rapport à un bruit de fond.

18. Dispositif selon l'une des revendications 11 à 17, caractérisé en ce que le deuxième dispositif d'analyse (20) comprend un analyseur de spectre (21) comme dispositif de reconnaissance des signaux auquel est appliqué le premier signal de sortie et la position angulaire du premier capteur (10) avec la direction de transport, ainsi que des dispositifs de mémoires (22) dans lesquels sont mémorisés, séparés les uns des autres, pour différents angles, des spectres du premier signal de sortie, et en ce qu'il est prévu des dispositifs de calculs (23) pour détecter dans les spectres mémorisés des valeurs d'amplitude maximales.

19. Dispositif selon l'une des revendications 11 à 18, caractérisé en ce que des dispositifs de mesure de vitesse (15) sont prévus pour déterminer la vitesse de transport du matériel textile et produire un signal indiquant la vitesse au moyen duquel il est possible de corriger et/ou de normaliser la position de la courbe de transfert du filtre à bande passante (13).

# FIG. 1

FIG. 2

FIG. 3

FIG. 4

FIG. 5

FIG. 6

FIG. 7

FIG. 8

## FIG. 9

## FIG. 10

## FIG. 11

## FIG. 12

FIG. 13

FIG. 14

FIG. 15

FIG. 16